# EUROPÄISCHE PATENTSCHRIFT

(11) **EP 3 784 521 B1**
(45) Veröffentlichungstag und Bekanntmachung des Hinweises auf die Patenterteilung: **23.06.2021**
(21) Anmeldenummer: 19739240.0
(22) Anmeldetag: 08.07.2019
(51) Int. Cl.: B60L 58/40, B60L 53/10, B60L 53/14, B60L 50/75, B60L 50/70

(54) **ELEKTRISCHES ENERGIESYSTEM MIT BRENNSTOFFZELLEN**
ELECTRICAL ENERGY SYSTEM COMPRISING FUEL CELLS
SYSTÈME D'ÉNERGIE ÉLECTRIQUE COMPRENANT DES PILES À COMBUSTIBLE

(30) Priorität: 07.08.2018 DE 102018213171
(43) Veröffentlichungstag der Anmeldung: 03.03.2021
(73) Patentinhaber: Audi AG, 85045 Ingolstadt (DE)
(72) Erfinder: BREU, Martin, 94377 Münster/Steinach (DE); SCHIEDERMEIER, Maximilian, 85049 Ingolstadt (DE)
(86) Internationale Anmeldenummer: PCT/EP2019/068225
(87) Internationale Veröffentlichungsnummer: WO 2020/030357

(56) Entgegenhaltungen:
- DE-A1-102015 011 897
- US-A1- 2010 129 690
- US-A1- 2017 203 669

## Beschreibung

Die Erfindung betrifft ein Verfahren zum Betreiben eines elektrischen Energiesystems für ein Kraftfahrzeug.

In mobilen Brennstoffzellenanwendungen, z.B. Brennstoffzellenfahrzeugen, umfasst das Energiesystem mit dem Hochspannungsstromkreis (HV-Kreis) üblicherweise zwei Energiespeicher. Üblicherweise ist die Brennstoffzelle (BZ) einer der beiden Energiespeicher und eine HV-Batterie ist der zweite Energiespeicher. Da die Brennstoffzelle eine stark lastabhängige Spannung aufweist, wird sie üblicherweise über einen Gleichstromwandler (DC/DC-Wandler) mit der HV-Batterie gekoppelt. Der DC/DC-Wandler gleicht die unterschiedlichen Spannungen von BZ und HV-Batterie an. Da die Brennstoffzelle einen sehr geringen Isolationswiderstand besitzt, wird der DC/DC-Wandler oft mit galvanischer Trennung ausgeführt. Dadurch können die gesetzlich geforderten und durch Normen vorgegebenen Grenzwerte für den Isolationswiderstand auf Seiten der HV-Batterie eingehalten werden. Um eine möglichst optimale Spannungsversorgung der an das Energiesystem angeschlossenen Verbraucher, z.B. der Antriebssysteme des BZ-Fahrzeugs, zu garantieren, werden diese in der Regel aus dem Stromkreis der HV-Batterie mit Strom versorgt.

Um die HV-Batterie laden zu können, wird üblicherweise ein Netzladegerät verwendet. Dieses besteht in der Regel aus einer Stufe zur Gleichrichtung bzw. zur Leistungsfaktorkorrektur (Power-Factor-Correction, oder kurz PFC), und einem DC/DC-Wandler mit galvanischer Trennung.

Aus der DE 10 2014 006 808 A1 ist ein Kraftfahrzeug mit einer HV-Batterie bekannt, das ein Bordnetz mit einem Anschluss für eine externe Energieversorgung umfasst, die über einen galvanisch getrennten Spannungswandler des Fahrzeugs mit dem Bordnetz verbunden ist;
Aus der DE 10 2009 007 737 A1 gehen eine Energiewandlervorrichtung für ein Kraftfahrzeug und ein entsprechendes Ladegerät hervor. Das Ladegerät ist über einen galvanisch getrennten Spannungswandler mit einem Fahrzeugbordnetz verbunden und lädt eine Batterie.

Die DE 10 2016 218 276 A1 offenbart ein Hochvolt-Kraftfahrzeug-Bordnetz, das eine Steuereinheit zur Verteilung von elektrischer Energie umfasst, die von einer Ladeschnittstelle stammt und über die Steuereinheit an einen galvanisch getrennten DC/DC-Wandler geleitet wird, der eine Batterie mit einer gewandelten Spannung lädt.

Die DE 10 2015 011 897 A1 betrifft eine Vorrichtung zum Bereitstellen von elektrischer Energie für eine elektrische Antriebseinheit eines Kraftfahrzeugs. Die Vorrichtung weist eine Brennstoffzelle und eine Hochvoltbatterie zum Bereitstellen der elektrischen Energie, einen Gleichspannungswandler und einen Hochvoltzwischenkreis auf. Die Brennstoffzelle ist über den Gleichspannungswandler mit dem Hochvoltzwischenkreis elektrisch verbunden und der Hochvoltzwischenkreis ist zur Energieversorgung der elektrischen Antriebseinheit mit der elektrischen Antriebseinheit elektrisch verbindbar. Die Hochvoltbatterie ist zum Versorgen der elektrischen Antriebseinheit unmittelbar mit dem Hochvoltzwischenkreis elektrisch verbunden.

In der US 2010/129690 A1 wird eine Fahrzeugstromquelleneinheit mit einem Steuerelement für eine externe Stromversorgung vorgestellt, das den Betrieb einer Heizung und eines Ladegeräts steuert, die mit elektrischer Energie von einer kommerziellen Stromquelle betrieben werden, die über einen externen Stromquellenverbinder geliefert wird. Die Steuerung erfolgt gemäß einer Klemmenspannung und -temperatur einer Brennstoffzelle, die von einem Brennstoffzellenzustandserfassungselement erfasst wird, und einem Zustand einer Batterie, die von einem Batteriezustandserfassungselement erfasst wird, wenn ein Brennstoffzellenfahrzeug angehalten wird, die Zufuhr von Reaktandengas zur Brennstoffzelle durch ein Brennstoffzellen-Steuerelement gestoppt wird und der externe Stromquellenverbinder mit der kommerziellen Stromquelle verbunden wird.

Die US 2017/203669 A1 offenbart eine Leistungssteuervorrichtung für ein Fahrzeug, in dem ein Elektromotor zum Antrieb des Fahrzeugs mit Strom von einer Batterie und einer Stromerzeugungseinheit versorgt wird, die Kraftstoff zur Stromerzeugung verbraucht. Die Leistungssteuervorrichtung umfasst: eine Erfassungseinheit für die verbleibende Kraftstoffmenge, eine Einheit zur Ermittlung eines Starts der Stromerzeugungseinheit, eine Steuereinheit, die einen Ausgang der Stromerzeugungseinheit steuert; und eine Einheit zur Erfassung einer aktuellen Laderate der Batterie. Die Steuereinheit stellt eine Zielladerate der Batterie derart ein, dass die Zielladerate abnimmt, wenn die verbleibende Kraftstoffmenge nach Durchführung der Bestimmung des Starts der Stromerzeugung abnimmt, und steuert die Stromerzeugungsleistung basierend auf einer Differenz zwischen die Zielladerate und der aktuellen Laderate.

Das separate Ladegerät verursacht zusätzliche Kosten, die zu den Kosten für das BZ-System und die übrigen Komponenten des Batteriekreises hinzukommen. Ferner wird zusätzlicher Bauraum für das Ladegerät benötigt. Darüber hinaus geht die maximale Ladeleistung für das Ladegerät stark in die Dimensionierung und damit in Kosten und Volumen des Geräts ein. Es muss also eine Wahl zwischen hoher Ladeleistung und hohen Kosten bzw. hohem Gewicht oder geringerer Ladeleistung und geringeren Kosten bzw. geringerem Volumen getroffen werden.

Die vorliegende Erfindung hat sich die Aufgabe gestellt, Verfahren zur Verfügung zu stellen, welche die geschilderten Nachteile zumindest teilweise beseitigen.

Die Aufgabe wird erfindungsgemäß gelöst durch ein Verfahren mit den Merkmalen des Anspruchs 1. Ausgestaltungen und Weiterbildungen der Erfindung ergeben sich aus dem abhängigen Anspruch.

Vorgestellt wird ein Energiesystem für ein Fahrzeug. Das Energiesystem umfasst mindestens eine Brennstoffzelle; mindestens eine HV-Batterie; und einen zwischen der mindestens einen Brennstoffzelle und der mindestens einen HV-Batterie angeordneten Gleichspannungswandler (DC/DC-Wandler) mit galvanischer Trennung. Zwischen der Brennstoffzelle und dem DC/DC-Wandler mit galvanischer Trennung ist ein Netzladegerät angeschlossen, das lediglich einen Gleichrichter (AC/DC-Wandler), aber keinen DC/DC-Wandler mit galvanischer Trennung enthält.

In einer Ausführungsform umfasst der Gleichrichter des Netzladegeräts einen Leistungsfaktorkorrekturfilter (PFC). In einer Ausführungsform ist der Leistungsfaktorkorrekturfilter ein passiver Oberschwingungsfilter. In einer anderen Ausführungsform ist der Leistungsfaktorkorrekturfilter ein aktiver Oberschwingungsfilter. In einer speziellen Ausführungsform ist dem aktiven Oberschwingungsfilter ein passiver Netzfilter vorgeschaltet.

In einer Ausführungsform ist der Gleichstromwandler mit galvanischer Trennung ein Gegentaktflusswandler. In einer anderen Ausführungsform ist der Gleichstromwandler mit galvanischer Trennung ein Resonanzwandler. In einer weiteren Ausführungsform ist der Gleichstromwandler mit galvanischer Trennung ein brückenloser PFC-Wandler.

Um die durch das Ladegerät entstehenden Nachteile zu eliminieren, wird der zwischen Brennstoffzelle und HV-Batteriekreis vorhandene DC/DC-Wandler mit galvanischer Trennung verwendet, um Teile der Ladefunktion zu übernehmen. Dabei wird insbesondere davon Gebrauch gemacht, dass der DC/DC-Wandler nur im Fahrbetrieb die Aufgabe hat, die Spannung zwischen BZ und HV-Batterie anzupassen. Dagegen kommt das Ladegerät nur zum Einsatz, wenn das Fahrzeug steht. Der DC/DC-Wandler mit galvanischer Trennung des Ladegeräts wird eliminiert, wodurch Komplexität, Kosten und Volumen des Ladegeräts reduziert werden.

Da die Brennstoffzellen-Leistung, welche vom DC/DC-Wandler angepasst und in den HV-Batteriekreis übertragen werden muss, in der Regel deutlich mehr als 40 kW beträgt, ist der DC/DC-Wandler für entsprechende Leistungen dimensioniert. Daher können auch höhere Ladeleistungen erzielt werden als mit gebräuchlichen Netzladegeräten.

Gegenstand der Erfindung ist ein Verfahren zum Betreiben eines Energiesystems für ein Fahrzeug, das mindestens eine Brennstoffzelle; mindestens eine HV-Batterie; und einen zwischen der mindestens einen Brennstoffzelle und der mindestens einen HV-Batterie angeordneten Gleichstromwandler mit galvanischer Trennung, sowie ein zwischen der Brennstoffzelle und dem Gleichstromwandler angeschlossenes Netzladegerät, das lediglich einen Gleichrichter, aber keinen DC/DC-Wandler mit galvanischer Trennung enthält, umfasst, bei dem zum Aufladen der HV-Batterie eine Netzspannung über den Gleichrichter gleichgerichtet und über den zwischen Brennstoffzelle und HV-Batterie angeordneten DC/DC-Wandler mit galvanischer Trennung an die HV-Batterie weitergeleitet wird. In einer Ausführungsform des Verfahrens erfolgt durch den Gleichrichter eine Leistungsfaktorkorrektur.

Zu den Vorteilen des Energiesystems und des erfindungsgemäßen Verfahrens zählen ein geringer Bauteil- und Ansteueraufwand, die eine kostengünstigere Realisierung des Energiesystems ermöglichen als bei Verwendung eines herkömmlichen Netzladegeräts. Gewicht und Volumen des Energiesystems sind geringer als bei herkömmlichen Energiesystemen. Zudem ermöglicht das Energiesystem eine hohe Ladeleistung.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen weiter beschrieben. Es zeigt:
- Figur 1: eine schematische Darstellung eines Energiesystems des Standes der Technik mit Ladegerät und angeschlossenen Verbrauchern;
- Figur 2: eine schematische Darstellung einer Ausführungsform des vorgestellten Energiesystems mit Ladegerät und angeschlossenen Verbrauchern.

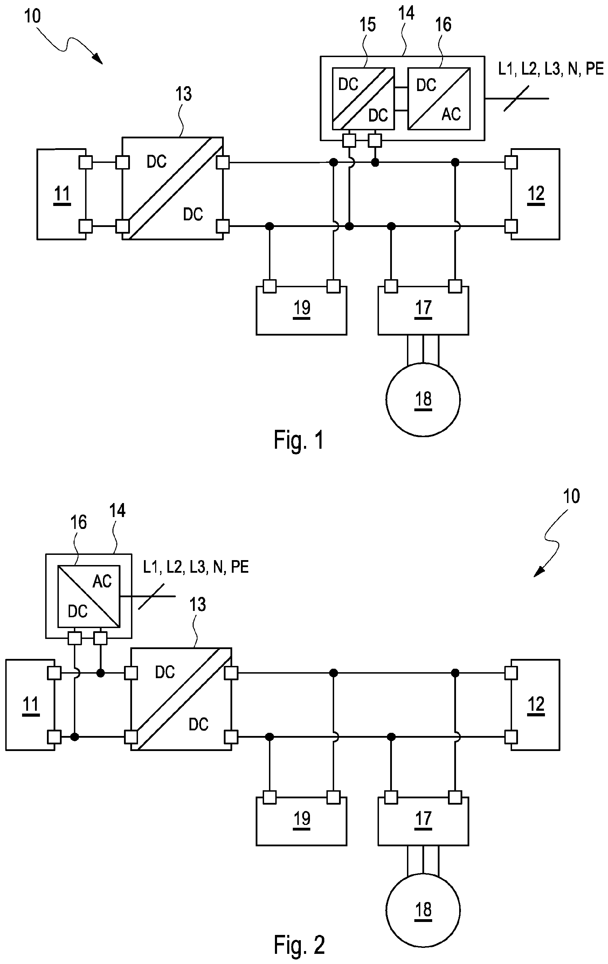

Figur 1 zeigt eine schematische Darstellung eines Energiesystems 10 des Standes der Technik mit einem AC-Ladegerät 14 und angeschlossenen Verbrauchern 17, 18, 19. Das Energiesystem 10 umfasst als Energiequellen eine Brennstoffzelle 11 und eine HV-Batterie 12. Diese sind über einen Gleichstromwandler 13 mit galvanischer Trennung verbunden. Zwischen dem DC/DC-Wandler 13 und der HV-Batterie 12 ist ein Netzladegerät 14 angeschlossen. Das Netzladegerät 14 des Energiesystems 10 umfasst einen DC/DC-Wandler 15 mit galvanischer Trennung und einen AC/DC-Wandler 16 mit Leistungsfaktorkorrektur (PFC, "Power Factor Correction"). An das Energiesystem 10 sind mindestens ein Pulswechselrichter 17 und mindestens ein Elektromotor 18 angeschlossen, sowie weitere HV-Komponenten 19 wie Nebenaggregate der Brennstoffzelle, 12 V DC/DC-Wandler, HV-Heizer, elektrische Klimakompressoren etc.

Figur 2 zeigt eine schematische Darstellung einer Ausführungsform des vorgestellten Energiesystems 10 mit einem AC-Ladegerät 14 und angeschlossenen Verbrauchern 17, 18, 19. Das Energiesystem 10 umfasst als Energiequellen eine Brennstoffzelle 11 und eine HV-Batterie 12. Diese sind über einen Gleichstromwandler 13 mit galvanischer Trennung verbunden. Zwischen Brennstoffzelle 11 und DC/DC-Wandler 13 ist ein Netzladegerät 14 angeschlossen. Das Netzladegerät 14 des Energiesystems 10 umfasst lediglich einen AC/DC-Wandler 16 mit Leistungsfaktorkorrektur (PFC, "Power Factor Correction"). Der DC/DC-Wandler 13 passt die Ausgangsspannung des Netzladegeräts 14 an die Spannung der HV-Batterie 12 an und trennt den Zwischenkreis mit der HV-Batterie 12 galvanisch vom Netzstrom. Dadurch kann im Netzgerät 14 ein eigener DC/DC-Wandler 15 mit galvanischer Trennung entfallen. An das Energiesystem 10 sind mindestens ein Pulswechselrichter 17 und mindestens ein Elektromotor 18 angeschlossen, sowie weitere HV-Komponenten 19 wie Nebenaggregate der Brennstoffzelle, 12 V DC/DC-Wandler, HV-Heizer, elektrische Klimakompressoren etc.

### Bezugszeichenliste

- 10: Energiesystem
- 11: Brennstoffzelle (BZ)
- 12: HV-Batterie
- 13: DC/DC-Wandler mit galvanischer Trennung
- 14: Netzladegerät
- 15: DC/DC-Wandler mit galvanischer Trennung
- 16: AC/DC-Wandler mit PFC
- 17: Pulswechselrichter (PWR)
- 18: Elektromotor (EM)
- 19: Sonstige HV-Komponenten

## Patentansprüche

1. Verfahren zum Betreiben eines Energiesystems (10) für ein Fahrzeug, das mindestens eine Brennstoffzelle (11); mindestens eine HV-Batterie (12); und einen zwischen der mindestens einen Brennstoffzelle (11) und der mindestens einen HV-Batterie (12) angeordneten Gleichstromwandler (13) mit galvanischer Trennung, sowie ein zwischen der Brennstoffzelle (11) und dem Gleichstromwandler angeschlossenes Netzladegerät (14), das lediglich einen Gleichrichter (16), aber keinen DC/DC-Wandler mit galvanischer Trennung enthält, umfasst, bei dem zum Aufladen der HV-Batterie (12) eine Netzspannung über den Gleichrichter (16) gleichgerichtet und über den zwischen Brennstoffzelle und HV-Batterie angeordneten DC/DC-Wandler (13) mit galvanischer Trennung an die HV-Batterie (12) weitergeleitet wird.

2. Verfahren nach Anspruch 1, bei dem im Gleichrichter (16) eine Leistungsfaktorkorrektur erfolgt.

## Claims

1. Method for operating an energy system (10) for a vehicle, which comprises at least one fuel cell (11); at least one HV-battery (12); and a direct current converter (13) with electrical isolation arranged between the at least one fuel cell (11) and the at least one HV-battery (12), and a mains charging device (14) connected between the fuel cell (11) and the direct current converter, which mains charging device contains only a rectifier (16) but does not contain a DC/DC-converter with electrical isolation, in which, for charging the HV-battery (12), a mains voltage is rectified by the rectifier (16) and passed on to the HV-battery (12) via the DC/DC converter (13) with electrical isolation arranged between fuel cell and HV-battery.

2. Method according to claim 1, in which a power factor correction takes place in the rectifier (16).

## Revendications

1. Procédé de fonctionnement d'un système d'énergie (10) pour un véhicule, qui comporte au moins une pile à combustible (11) ; au moins une batterie haute tension (12) ; et un convertisseur de courant continu (13) agencé entre l'au moins une pile à combustible (11) et l'au moins une batterie haute tension (12) avec une séparation galvanique, ainsi qu'un chargeur secteur (14) raccordé entre la pile à combustible (11) et le convertisseur de courant continu qui contient juste un redresseur (16) mais aucun convertisseur de CC/CC avec une séparation galvanique, pour lequel pour la charge de la batterie haute tension (12) une tension de secteur est redressée par le biais du redresseur (16) et est transmise par le biais du convertisseur CC/CC (13) agencé entre la pile à combustible et la batterie haute tension avec une séparation galvanique à la batterie haute tension (12).

2. Procédé selon la revendication 1, pour lequel une correction de facteur de puissance est effectuée dans le redresseur (16).
